# EUROPEAN PATENT APPLICATION

(11) **EP 4 807 147 A1**
(43) Date of publication of application: **16.09.2026**
(21) Application number: 26164813.3
(22) Date of filing: 13.03.2026
(51) Int. Cl.: F01D 21/00, F01D 25/20, F02C 7/06

(54) **BEARING COMPARTMENT LUBRICATION SYSTEM WITH REFILL RESERVOIR**

(30) Priority: 14.03.2025 US 202519080281
(71) Applicant: RTX Corporation, Farmington, CT 06032 (US)
(72) Inventor: GNITZCAVICH, Nicholas Daniel, Farmington, 06032 (US); SHEIL, Robert F., Farmington, 06032 (US); AVIS, Thomas B., Farmington, 06032 (US); HERTZ, Alexander, Farmington, 06032 (US); DEFAZIO, Katherine M., Farmington, 06032 (US); DUNN, Teagan L., Farmington, 06032 (US); YELLE, Jesse, Farmington, 06032 (US); PARNIN, Francis, Farmington, 06032 (US)
(74) Representative: Dehns

(57) **Abstract**

A gas turbine engine (20) includes a propulsor (42), a compressor section (24) and a turbine section (28). The propulsor (42), the compressor section (24) and the turbine section (28) each include rotors for rotation with at least one shaft (104) about an axis (A). At least one bearing compartment (112, 114) includes at least one bearing (108) for supporting the at least one shaft (104). A lubricant supply system (111) supplies lubricant to the at least one bearing (108), and into the at least one bearing compartment (112, 114). The lubricant supply system (111) includes a pump (124) for delivering lubricant into an oil supply tube (110) when the engine (20) is operating for communicating the lubricant into the at least one bearing compartment (112, 114). The lubricant pump (124) further delivers lubricant into a refill reservoir (133) during operation of the engine (20). The refill reservoir (133) communicates with the oil supply tube (110) through a metering plug (131) such that at shutdown of the gas turbine engine (20), lubricant may flow from the refill reservoir (133) into the oil supply tube (110) through the metering plug (131). There is a second of the at least one bearing compartment (112, 114) including at least a second bearing (108), and a second oil supply tube (129) for delivering lubricant to the second bearing compartment (114) when the oil pump (124) is operating. The second bearing compartment (114) further receives lubricant from the refill reservoir (133) through the at least one metering plug (131). There is a single refill reservoir (133) and a single metering plug (131) for providing lubricant to the first and second bearing compartment (112, 114) at engine shutdown. A method is also disclosed.

## Description

### BACKGROUND OF THE INVENTION

This application relates to a gas turbine engine with a bearing compartment lubrication system that includes a refill reservoir to refill supply tubes at engine shutdown.

Gas turbine engines are known, and typically include a propulsor delivering air as propulsion air, and delivering air into a core engine. The core engine includes a compressor section that compresses the air and delivers it into a combustor. The air is mixed with fuel and ignited, and products of this combustion pass downstream over a turbine section.

It is known to have a plurality of rotors in the propulsor, compressor and turbine sections supported on bearings. These bearings are supplied with lubricant such that they operate to support a shaft rotating with the rotors.

There are challenges with supplying lubricant to the bearings.

### SUMMARY OF THE INVENTION

According to an aspect of the present invention, a gas turbine engine includes a propulsor, a compressor section and a turbine section. The propulsor, the compressor section and the turbine section each include rotors for rotation with at least one shaft about an axis. At least one bearing compartment includes at least one bearing for supporting the at least one shaft. A lubricant supply system supplies lubricant to the at least one bearing, and into the at least one bearing compartment. The lubricant supply system includes a pump for delivering lubricant into an oil supply tube when the engine is operating and into an oil supply tube for communicating the lubricant into the at least one bearing compartment. The lubricant pump further delivers lubricant into a refill reservoir during operation of the engine. The refill reservoir communicates with the oil supply tube through a metering plug, and such that at shutdown of the gas turbine engine, lubricant may flow from the refill reservoir into the oil supply tube through the metering plug. There is a second of the at least one bearing compartment including at least a second bearing, and a second oil supply tube for delivering lubricant to the second bearing compartment when the oil pump is operating. The second bearing compartment further receives lubricant from the refill reservoir through the at least one metering plug. There is a single refill reservoir and a single metering plug for providing lubricant to the first and second bearing compartment at engine shutdown.

Optionally, and in accordance with the above, the first and second bearing compartments are in the turbine section.

Optionally, and in accordance with any of the above, an anti-siphon meter is positioned between the pump and the refill reservoir and oil supply tube.

Optionally, and in accordance with any of the above, the refill reservoir has an axially extending portion and a radially inwardly extending portion.

Optionally, and in accordance with any of the above, the refill reservoir is vertically above an upper end of the first and second bearing compartments.

Optionally, and in accordance with any of the above, the at least two oil supply tubes are vertically beneath the lower end.

Optionally, and in accordance with any of the above, the at least two oil supply tubes are vertically beneath a lower end of the first and second bearing compartments.

Optionally, and in accordance with any of the above, an anti-siphon meter is positioned between the pump and the refill reservoir and oil supply tube.

Optionally, and in accordance with any of the above, the refill reservoir has a horizontally extending portion and a vertically extending portion.

Optionally, and in accordance with any of the above, the refill reservoir is vertically above an upper end of the first and second bearing compartments.

Optionally, and in accordance with any of the above, the at least two oil supply tubes are vertically beneath the lower end.

Optionally, and in accordance with any of the above, the refill reservoir is vertically above an upper end of the first and second bearing compartments.

Optionally, and in accordance with any of the above, the at least two oil supply tubes are vertically beneath the lower end.

According to another aspect of the present invention, a method of operating a gas turbine engine includes the steps of 1) mounting a rotor to rotate with a shaft, 2) supporting said shaft with at least two bearings received within at least two bearing compartments, 3) operating the engine and supplying lubricant into the at least two bearing compartments while the engine is operating, and further supplying lubricant into a single refill reservoir while the engine is operating and 4) shutting down the engine, and passing lubricant from the single refill reservoir into at least two oil supply tubes through a metering plug into both the at least two bearing compartments.

Optionally, and in accordance with the above, the refill reservoir is vertically above an upper end of the first and second bearing compartments.

Optionally, and in accordance with any of the above, the at least two oil supply tubes are vertically beneath the lower end.

Optionally, and in accordance with any of the above, the at least two bearing compartments are in a turbine section.

Optionally, and in accordance with any of the above, the single refill reservoir and the at least two oil supply tubes are vertically below the at least two bearing compartments.

Optionally, and in accordance with any of the above, the single refill reservoir and the at least two oil supply tubes are vertically below the at least two bearing compartments.

Optionally, and in accordance with any of the above, the single refill reservoir and the at least two oil supply tubes are vertically below the at least two bearing compartments.

The present invention may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A schematically shows a portion of a turbine section including a bearing compartment.
Figure 2B is a cross-section along line B-B of Figure 2A.
Figure 3A shows a disclosed lubricant supply system with a refill reservoir during engine operation.
Figure 3B is a cross-section through an oil supply tube at shutdown.
Figure 4 shows the Figure 3 system at engine shutdown, and functioning to refill supply tubes with lubricant.

### DETAILED DESCRIPTION

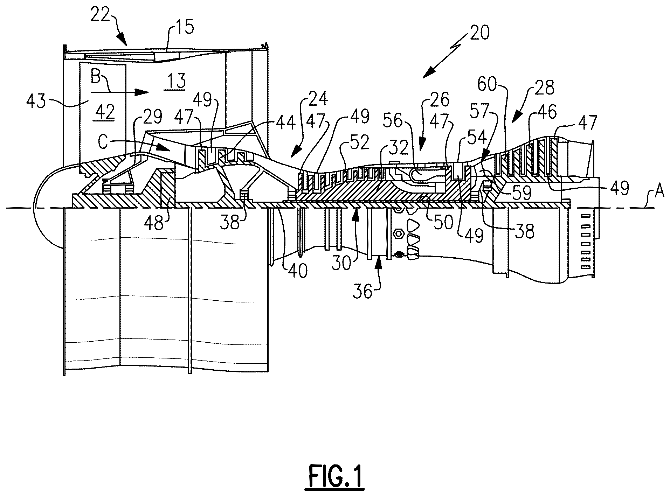

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 degrees Celsius (°C)). The TET may be greater than or equal to 2700.0 °F (1480 °C), or more narrowly less than or equal to 3500.0 °F (1930 °C), such as between 2750.0 °F and 3350.0 °F (between 1510 °C and 1840 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (538 °C), or more narrowly greater than or equal to 800.0 °F (427 °C), such as between 900.0 °F and 975.0 °F (between 482 °C and 524 °C). The relatively low EGT can be utilized in combination with the other techniques disclosed herein to reduce fuel consumption.

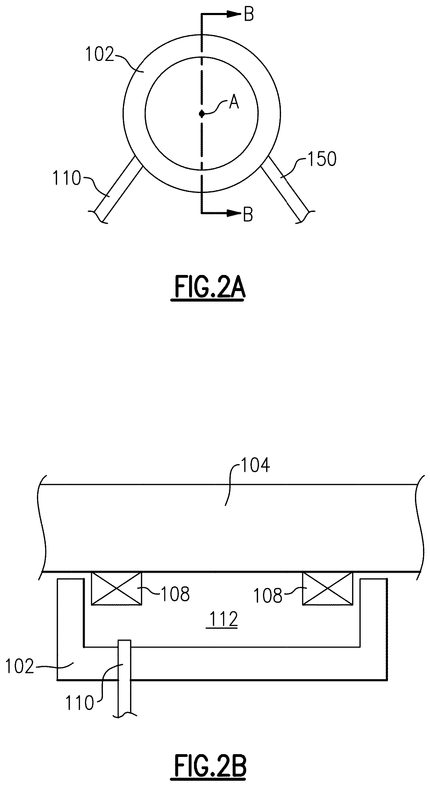

Figure 2A shows a bearing housing 102 that may be in a mid-turbine frame. Oil is supplied into housing 102 from a supply line 110. A scavenge line 150 is also shown. As shown, lines 110 and 150 are at a vertically lower location.

Bearing housing 102 is shown in Figure 2B. Bearings 108 support rotation of a shaft 104. An oil supply tube 110 is shown schematically for delivering oil into a bearing compartment 112 receiving the bearings 108.

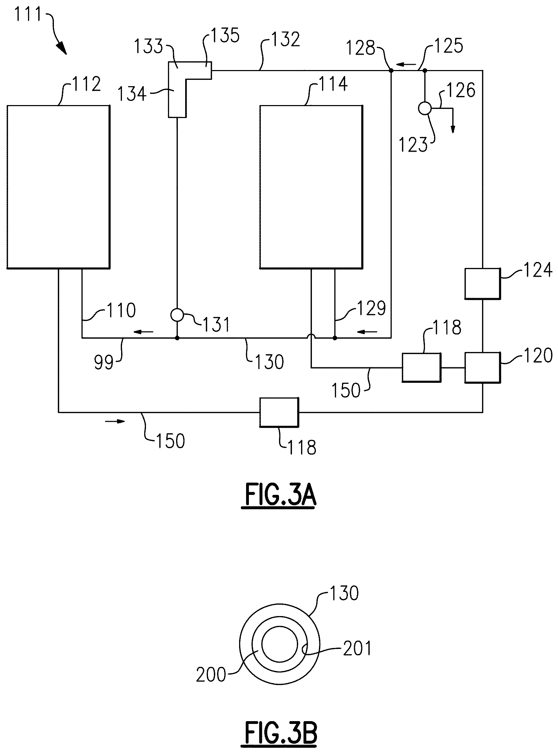

An oil supply system 111 is shown in Figure 3A for delivering oil to the bearing compartment 112, and a second bearing compartment 114. While the system 111 is shown providing lubrication to the turbine section, a similar system could be utilized for providing lubrication to bearings in other locations.

An oil supply tube 99 is shown delivering oil to line 110, and into bearing compartment 112. A scavenge pump 118 removes oil from the bearing compartment 112, and delivers it into an oil tank 120. A pump 124 is shown delivering oil past an anti-siphon meter 123 selectively communicating with an air breather passage 126.

Downstream of the air breather passage 126, the oil reaches a supply line 125, then moves into a tube 128. The tube 128 communicates with an oil supply tube 129 for delivering lubricant into the second bearing compartment 114.

The tube 128 further communicates to a tube 130 passing oil into tube 99. Upstream of tube 99 the oil also passes into a tube 132, and into a refill reservoir 133. Refill reservoir 133 has a vertically extending section 134 and a horizontally extending section 135.

The refill reservoir 133 is vertically above an upper end of the first and second bearing compartments 112 and 114
The oil supply tubes 129 and 110 are vertically beneath the upper end of the bearing compartments 112 and 114.

Figure 3A shows the lubricant supply system 111 while the engine is operating. As can be appreciated, refill reservoir 133 will be relatively full during such time. A metering plug 131 limits flow from the refill reservoir 133 into line 99.

At shutdown the anti-siphon meter 123 is open to communicate the breather tube 126 to relieve pressure or vacuum in the line 125. This will resist migration of oil from the tubes 125, 132, 128, 129, 130, 99 and 110. However, the anti-siphon 123 meter is tiny and does not relieve pressure instantaneously. In the past, there has been migration of the oil from the oil supply tubes such that there may be only a film of oil on an internal diameter of a tube.

Figure 3B is a schematic view which may be a cross-section through a tube, e.g. oil supply tube 110 or 129, as may have been found in the prior art at shutdown. As shown, a thin film of lubricant 200 may adhere to an inner wall 201 of the tube 110 or 129.

As known, the turbine section 28 will be extremely hot, and this could lead to coking of the lubricant 200 on the tubes 110 and 129 leading to flow blockage.

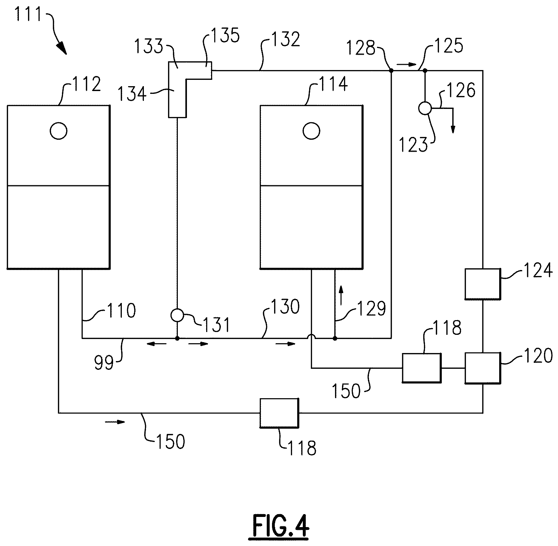

Figure 4 shows the system 111 at and/or just after at shutdown. The refill reservoir 133 has now been at least partially emptied to refill the oil supply tubes 129, 130, 99 and 110.

Now, at shutdown, the coke formation condition as described with regard to Figure 3B will be dramatically reduced. Instead, the oil supply lines 129, 130, 99 and 110 should be close to full, if not full.

A gas turbine engine under this invention could also be said to include a propulsor, a compressor section and a turbine section. The propulsor, the compressor section and the turbine section each include rotors for rotation with at least one shaft about an axis. At least one bearing compartment includes at least one bearing for supporting the at least one shaft. A lubricant supply system supplies lubricant to the at least one bearing, and into the at least one bearing compartment. The lubricant supply system includes a pump for delivering lubricant into an oil supply tube when the engine is operating and into an oil supply tube for communicating the lubricant into the at least one bearing compartment. The lubricant pump further delivers lubricant into a refill reservoir during operation of the engine. The refill reservoir communicates with the oil supply tube through a metering plug, and such that at shutdown of the gas turbine engine, lubricant may flow from the refill reservoir into the oil supply tube through the metering plug. There is a second of the at least one bearing compartment including at least a second bearing, and a second oil supply tube for delivering lubricant to the second bearing compartment when the oil pump is operating. The second bearing compartment further receives lubricant from said refill reservoir through the at least one metering plug. There is a single refill reservoir and a single metering plug for providing lubricant to the first and second bearing compartment at engine shutdown.

A method of operating a gas turbine engine under this invention could be said to include the steps of 1) mounting a rotor to rotate with a shaft, 2) supporting said shaft with at least two bearings received within at least two bearing compartments, 3) operating the engine and supplying lubricant into the at least two bearing compartments while the engine is operating, and further supplying lubricant into a single refill reservoir while the engine is operating and 4) shutting down the engine, and passing lubricant from the single refill reservoir into at least two oil supply tubes through a metering plug into both the at least two bearing compartments.

Although embodiments of this invention have been shown, a worker skill in this art would recognize that modifications would come within the scope of this invention. As one example, while the propulsor is disclosed as a fan it could also be an open rotor. For that reason, the following claims should be studied to determine the true scope and content of this invention.

## Claims

1. A gas turbine engine (20) comprising:
a propulsor (42);
a compressor section (24);
a turbine section (28);
the propulsor (42), the compressor section (24) and the turbine section (28) each including rotors for rotation with at least one shaft (104) about an axis (A);
a first bearing compartment (112, 114) and a second bearing compartment (114), each of the first and second bearing compartments (112, 114) including at least one bearing (108) for supporting said at least one shaft (104); and
a lubricant supply system (111) to supply lubricant to the at least one bearing (108), and into the first and second bearing compartments (112, 114), said lubricant supply system (111) including a pump (124) for delivering lubricant into a first oil supply tube (110) and a second oil supply tube (129) when the engine (20) is operating for communicating the lubricant into the first and second bearing compartments (112, 114), respectively;
wherein the lubricant pump (124) further delivers lubricant into a refill reservoir (133) during operation of the engine (20), the refill reservoir (133) communicating with the first and second oil supply tubes (110, 129) through a metering plug (131), such that at shutdown of the gas turbine engine (20), lubricant may flow from the refill reservoir (133) into the first and second oil supply tubes (110, 129) through the metering plug (131); and
wherein there is a single refill reservoir (133) and a single metering plug (131) for providing lubricant to the first and second oil supply tubes (110, 129) at engine shutdown.

2. The gas turbine engine (20) as set forth in claim 1, wherein said first and second bearing compartments (112, 114) are in the turbine section (28).

3. The gas turbine engine (20) as set forth in claim 1 or 2, wherein an anti-siphon meter (123) is positioned between the pump (124) and the refill reservoir (133) and oil supply tube (110).

4. The gas turbine engine (20) as set forth in any preceding claim, wherein the refill reservoir (133) has an axially extending portion (135) and a radially inwardly extending portion (134).

5. The gas turbine engine (20) as set forth in any preceding claim, wherein the refill reservoir (133) is vertically above an upper end of the first and second bearing compartments (112, 114).

6. The gas turbine engine (20) as set forth in any preceding claim, wherein the at least two oil supply tubes (110, 129) are vertically beneath an upper end of the first and second bearing compartments (112, 114).

7. The gas turbine engine (20) as set forth in any preceding claim, wherein the at least two oil supply tubes (110, 129) are vertically beneath a lower end of the first and second bearing compartments (112, 114).

8. The gas turbine engine (20) as set forth in any preceding claim, wherein the refill reservoir (133) has a horizontally extending portion (135) and a vertically extending portion (134).

9. A method of operating a gas turbine engine (20) comprising the steps of:
1) mounting a rotor to rotate with a shaft (104);
2) supporting said shaft (104) with at least two bearings (108) received within at least two bearing compartments (112, 114);
3) operating the engine (20) and supplying lubricant into the at least two bearing compartments (112, 114) through at least two respective oil supply tubes (110, 129) while the engine (20) is operating, and further supplying lubricant into a single refill reservoir (133) while the engine (20) is operating; and
4) shutting down the engine (20), and passing lubricant from the single refill reservoir (133) into the at least two oil supply tubes (110, 129) through a metering plug (131).

10. The method as set forth in claim 9, wherein the refill reservoir (133) is vertically above an upper end of the first and second bearing compartments (112, 114).

11. The method as set forth in claim 9 or 10, wherein the at least two oil supply tubes (129) are vertically beneath an upper end of the first and second bearing compartments (112, 114).

12. The method as set forth in any of claims 9 to 10, wherein the at least two oil supply tubes (129) are vertically beneath a lower end of the first and second bearing compartments (112, 114).

13. The method as set forth in any of claims 9 to 12, wherein said at least two bearing compartments (112, 114) are in a turbine section (28).
